# EUROPEAN PATENT SPECIFICATION

(11) **EP 1 898 186 B1**
(45) Date of publication and mention of the grant of the patent: **15.12.2010**
(21) Application number: 06120288.3
(22) Date of filing: 07.09.2006
(51) Int. Cl.: G01F 1/26, G01F 15/08, B67D 7/36

(54) **Method and apparatus for detecting gas bubble content of flowing fluid**
Verfahren und Vorrichtung zur Detektierung des Gasblasengehalts einer Flüssigkeitsströmung
Procédé et dispositif pour détecter la teneur en bulles de gaz dans un courant liquide

(43) Date of publication of application: 12.03.2008
(73) Proprietor: Dresser Wayne Aktiebolag, 200 61 Malmö (SE)
(72) Inventor: Håkansson, Marie, 211 41 Malmö (SE); Larsson, Bengt I., 274 53 Skivarp (SE); Mårtensson, Mattias, SE-275 93 SJÖBO (SE)
(74) Representative: Milanov, Nina Vendela Maria

(56) References cited:
- JP-A- 2005 043 101
- US-A- 5 501 246

## Description

### Technical Field

The present invention relates to a method and fuel dispensing unit for refuelling vehicles and for preventing dispensing of fuel having excessive amounts of entrained gas.

### Background Art

When a fuel dispensing unit is used for filling a fuel tank of a vehicle, entrained gas may form in the fuel when it is pumped or transported along the fuel line, from a fuel storage tank to a nozzle of the fuel dispensing unit. Some of the reasons for gas formation may be wake caused by moving parts such as pumps, vortexes and regions of low pressure along the fluid pathway, any unattended leakage etc.

Various techniques are available to separate gas, such as vapor, air or any other gas, from fuel dispensed from a fuel dispensing unit to a vehicle. This separation is important since a fuel flow meter, which cannot differentiate between the liquid fuel and any entrained gas, will produce an erroneous reading for the volume of fuel dispensed if the fuel is contaminated with gas. After air separation, a person purchasing the fuel pays only for the fuel dispensed and not for any gas previously entrained therein.

For example, US-5,501,246 describes a device for separating gas entrained in a flow of liquid fuel. The device has a main housing with a liquid inlet, a liquid outlet and a separation chamber within the housing and between the inlet and the outlet. Gas entrained in the liquid is separated when the liquid passes within the separation chamber and the gas exits the chamber via a vent passage. Gas detection means are arranged to detect gas in the vent passage, which means is connected to a pilot valve which closes when gas is detected. Closure of the pilot valve results in closure of a main valve that must be open when fuel is to be dispensed.

Further background art is reflected by JP 2005 043101.

A general problem with existing devices for gas separation and means for detecting the presence of gas is that they are relatively complicated and expensive both in respect or construction and production.

Another difficulty is that it is complicated to detect problems related to the flow or fuel streaming through a fuel dispensing unit.

### Summary of the Invention

It is an object of the present invention to provide an improvement of the above techniques and prior art.

A particular object is to provide a fuel dispensing unit more efficiently preventing air from being dispensed together with the fuel entraining the air.

These and other objects as well as advantages that will be apparent from the following description of the present invention are achieved by a method and a fuel dispersing unit according to the respective independent claims. Preferred embodiments are defined in the dependent claims.

Hence a method is described, said method monitoring a fuel stream flowing from a fuel storage tank, through a fuel line and to a fuel dispensing nozzle of a fuel dispensing unit. The method comprises the steps of: generating a variation of the flow of the fuel stream by means of a valve unit, said variation based on the amount of gaseous fluid in the fuel stream; detecting the variation of the flow of the fuel stream; and determining if the detected variation exceeds a specific level. The inventive method is advantageous in that specific amounts of gaseous fluid in the fuel is detected.

The step of generating a variation may comprise stopping the flow of the fuel stream, if the amount of gaseous fluid in the fuel stream exceeds a specific level, which efficiently prevents dispensing of gaseous fluid.

The method may further comprise the step of stopping the flow of the fuel stream, if the detected variation of the flow of the fuel stream exceeds a specific level.

The step of detecting the variation of the flow of the fuel stream may comprise any of: measuring fuel flow variations by means of a fuel meter arranged in the fuel line; detecting pressure variations by means of a pressure sensor arranged in the fuel line; and detecting movement variations by means of a movement sensor monitoring a movable valve unit arranged in the fuel line, which each provides for an uncomplicated design.

According to another aspect of the invention, a fuel dispensing unit is provided for providing a fuel stream flowing from a fuel storage tank, through a fuel line and to a fuel dispensing nozzle of the fuel dispensing unit, comprising control means configured to detect a variation of the flow of the fuel stream and to determine if the detected variation exceeds a specific level. The fuel dispensing unit comprises a valve unit configured to vary the flow of the fuel stream. The variation is based on the amount of gaseous fluid in the fuel stream.

The fuel dispensing unit according to the invention is advantageous in that problems related to the amount of gaseous fluid in the fuel stream is detected.

The control means may be configured to stop the flow of the fuel stream, if the amount of gaseous fluid in the fuel stream exceeds a specific level.

The control means may also be configured to stop the flow of the fuel stream, if detected variation of the flow of the fuel stream exceeds a specific level.

The valve unit may comprise a movable valve body for varying the flow of the fuel stream, which facilitates a flexible and compact design.

The valve unit may be configured to open when a pressure exerted on the valve body by the fuel stream exceeds a specific level, which is advantageous since fuel contaminated with gaseous fluid exerts, in comparison with fuel having less gaseous contaminations, a lower pressure on the valve body. In other words, fuel with air-contaminations above a specific level may not pass. Moreover, even if the exerted pressure is exactly on the specific level which results in the valve unit varying its regulation very quickly, no fuel contaminated above a specific, acceptable level may be dispended, since the control means may prevent this.

The valve unit may comprise a resilient element configured to provide a biasing force on the valve body for closing the valve unit, which provides a cost efficient and self controlled valve unit allowing only fuel with contaminations below a specific level to pass.

The control means may comprise a sensor for detecting movement of the valve body, and the control means may be configured to associate the variation of the flow of the fuel stream with variations of the movement of the valve body. This configuration is advantageous since the physical movement of the valve body directly depends on the flow variations of the fuel stream, which provides for an uncomplicated design.

The fuel line may comprise a flow meter for measuring the flow of the fuel stream, and since flow meters are commonly present in fuel dispensers, a cost efficient solution is provided.

The fuel line may comprise a pressure sensor for measuring a pressure exerted by the fuel stream, and the control means may be configured to associate the variation of the flow of the fuel stream with variations of the pressure measured by the pressure sensor. Since a pressure exerted by a streaming fluid depends on the flow rate of the fluid, and since a pressure sensor is conveniently arranged, it is possible to provide a highly feasible solution.

The valve may be controlled by an electrical signal, and the control means may be configured to associate the variation of the flow of the fuel stream with variations of said electrical control signal.

The fuel line may comprise an air separator arranged upstream a fuel pump and downstream the valve, which provides a solution efficiently preventing air from being dispended from the fuel dispensing unit.

It should be noted that the inventive method described above may comprise any of the embodiments described in association with the fuel dispensing unit.

### Brief Description of the Drawings

Embodiments of the present invention will now be described, by way of example, with reference to the accompanying schematic drawings, in which
Fig. 1 is a schematic view of a fuel dispensing unit,
Fig. 2 is a schematic view of a valve unit according to a first embodiment of the invention, and
Fig. 3 is a schematic view of a valve unit according to a second embodiment of the invention.

### Detailed Description of Embodiments

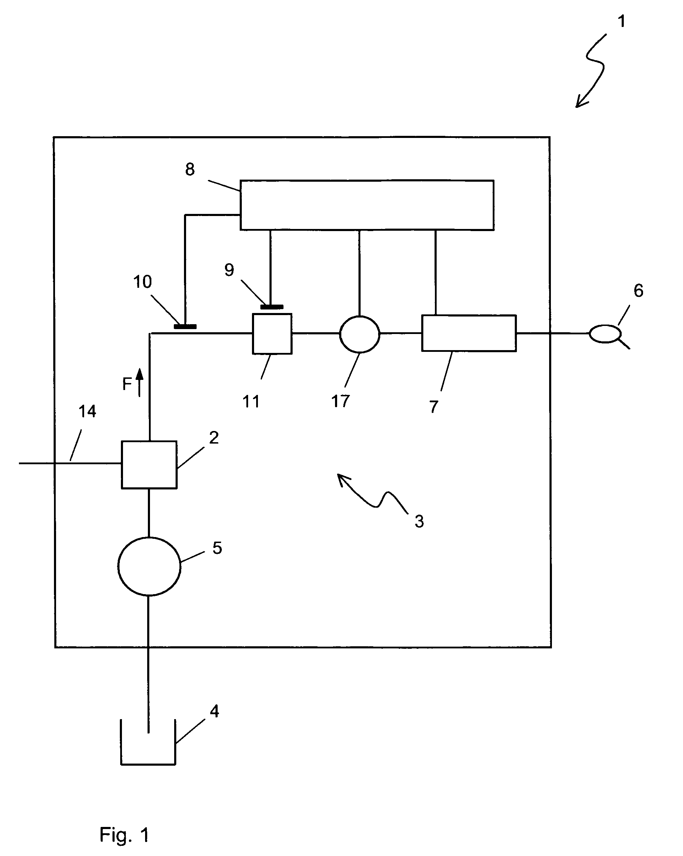

With reference to Fig. 1, a fuel dispensing unit 1 comprises a fuel line 3 for drawing fuel from a fuel storage tank 4. The fuel line 3 comprises, in a downstream order, a pump 5, an air separator 2, a fuel flow meter 7 and a fuel dispensing nozzle 6.

In operation, a fuel stream F is produced and fuel is dispensed from the dispensing nozzle 6 to the tank of a vehicle (not shown). Gaseous fluid entrained in the fuel is separated from the fuel by means of the air separator 2 and is vented through an air vent 14.

Downstream the air separator 2 but upstream the flow meter 7 a valve unit 11 is arranged for detecting if the amount of gaseous fluid exceeds a specific level and to prevent the flow if the gaseous fluid exceeds the specific level.

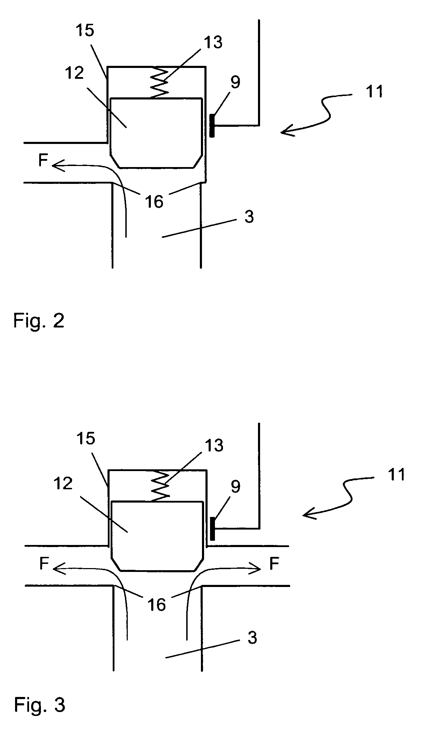

With reference to Fig. 2, the valve unit 11 is arranged in the fuel line 3 and comprises a valve housing 15 and a valve body 12 configured to move in the valve housing 15. A compression spring 13 applies a force on the valve body 12, pressing the valve body 12 towards a valve seat 16 for providing a seal and preventing the fuel stream F from flowing past the valve unit 11.

During a fuel filling operation, the fuel stream F passes the valve unit 11 and exerts a force on the valve body 12, pressing it away from a valve seat 16 which allows fuel to pass and be dispensed.

If gaseous fluid is not efficiently enough separated by the air separator 2, the fuel stream F contains gaseous fluid which has a lower density than deaerated fuel. A lower density results in a decreased mass-flow which means that the pressure applied by the fuel stream F on the valve body 12 decreases.

The spring constant for the spring 13 is selected so that it presses the valve body 12 against the valve seat 16 when the pressure applied by the fuel stream F on the valve body 12 falls below a specific level, which level is selected depending on what level of gaseous contaminations is acceptable.

Of course, the spring constant may be experimentally selected, but known equations for dynamic and/or static pressure is preferably applied.

Occasionally the forces exerted on the valve body 12 by the fuel stream F and the spring 13 are equal, resulting in the valve body 12 oscillating with a relatively high, specific frequency. This means that the valve unit's 11 regulation of the flow of the fuel stream F varies very quickly, and hence that a variation of the flow of the fuel stream F is generated and that the variation is based on the amount of gaseous fluid in the fuel stream F.

To prevent this, control means 8 are arranged to detect movement of the valve body 12, and when the specific frequency is detected, the control means 8 closes a second valve 17 arranged in the fuel line downstream the valve 11, for preventing any fuel to be dispensed which thereby stops the oscillation of the valve body 12. Preferably the specific, undesirable frequency is experimentally determined.

Once the oscillation of the valve body 12 has stopped the second valve 17 is opened, and since the closing of the second valve 17 results in a pressure build-up downstream the valve 11, the fluid pressure on the valve body 12 is now different and hence the valve body 12 will not oscillate excessively.

Preferably the control of the valve unit 11 involves no electronics, but is mechanically and/or hydrostatically controlled.

In a first embodiment the variations of the valve units 11 regulation of the flow of the fuel stream F is detected by any conventional and suitable movement sensor 9 connected to the control means 8. The movement sensor 9 detects movement of the valve body 12, which movement is directly related to the variation of the flow of the fuel stream F.

In a second embodiment the variations of the flow of the fuel stream F is detected by the flow meter 7 connected to the control means 8. The flow meter 7 continuously measures the flow rate of the fuel stream F and detects any variations thereof.

In a third embodiment the variations of the flow of the fuel stream F is detected by a pressure sensor 10 connected to the control means 8 and arranged in the fuel line 3. The pressure sensor 10 detects a pressure exerted by the fuel stream/pressurized fuel, which pressure depends on the flow of the fuel stream F and hence also the valve units 11 regulation of the flow of the fuel stream F. The pressure/flow relationship is taught by known theory within this field of technology (Bernoulli's equation).

During operation, the control means 8 continuously process a signal from, depending on embodiment, the movement sensor 9, flow meter 7 or pressure sensor 10. This signal is as described above related to the variations of the flow of the fuel stream F. If the received signal indicates that the valve unit 11 oscillates with the undesired, specific frequency discussed above, the control means 8 closes as mentioned the second valve 17.

Fig. 3 illustrates another embodiment where the fuel line 3 is divided upstream the second valve 17 for providing fuel to the illustrated fuel flow meter 7 as well as to a second fuel flow meter (not shown) also connected to the control means 8 and in fluid communication with a second fuel dispensing nozzle (not shown). In this embodiment the valve body 12 may close the fuel line 3 so that no fuel flow to any of the dispensing nozzles. Of course the regulation of the flow of the fuel stream F may be detected by any of the flow meters.

## Claims

1. A method of monitoring a fuel stream (F) flowing from a fuel storage tank (4), through a fuel line (3) and to a fuel dispensing nozzle (5) of a fuel dispensing unit (1), said a method comprising the steps of:
generating a variation of the flow of the fuel stream (F) by means of a valve unit (11), said variation based en the amount of gaseous fluid in the fuel stream (F),
detecting the variation of the flow of the fuel stream (F), and
determining if the detected variation exceeds a specific level.

2. A method according to claim 1, wherein the step of generating a variation comprises stopping the flow of the fuel stream (F), if the amount of gaseous fluid in the fuel stream (F) exceeds a specific level.

3. A method according to claim 1 or 2, further comprising the step of stopping the flow of the fuel stream (F), if the detected variation of the flow of the fuel stream (F) exceeds a specific level.

4. A method according to any one of claims 1-3, wherein the step of detecting the variation of the flow of the fuel stream (F) comprises any of:
measuring fuel flow variations by means of a fuel meter (7) arranged in the fuel line (3),
detecting pressure variations by means of a pressure sensor arranged in the fuel line (3), and
detecting movement variations by means of a movement sensor (9) monitoring the valve unit (11) arranged in the fuel line (3).

5. A fuel dispensing unit for providing a fuel stream (F) flowing from a fuel storage tank (4), through a fuel line (3) and to a fuel dispensing nozzle (6) of the fuel dispensing, unit (1), comprising control means (8) configured to detect a variation of the flow of the fuel stream (F), the control means (8) being configured to determine if the detected variation exceeds a specific level, **characterised by**
a valve unit (11) configured to vary the flow of the fuel stream (F), said variation based on the amount of gaseous fluid in the fuel stream (F).

6. A fuel dispensing unit according to claim 5, wherein the control means (8) is configured to stop the flow of the fuel stream (F), if the amount of gaseous fluid in the fuel stream (F) exceeds a specific level.

7. A fuel dispersing unit according to claim 5 or 6, wherein the control means (8) is configured to stop the flow of the fuel stream (F), if detected variation of the flow of the fuel stream (F) exceeds a specific level.

8. A fuel dispensing unit according to any one of claims 5-7, wherein the valve unit (11) comprises a movable valve body (12) for varying the flow of the fuel stream (F).

9. A fuel dispensing unit according of to claim 8, wherein the valve unit (11) is configured to open when a pressure exerted the valve body (12) the fuel stream (F) exceeds a specific level.

10. A fuel dispensing unit according to claim 8 or 9, wherein the valve unit (11) comprises a resilient element (13) configured to provide a biasing force on the valve body (12) for closing the valve unit (11).

11. A fuel dispensing unit according to any one of claims 8-10, wherein the control means (8) comprises a sensor (9) for detecting movement of the valve body (12), said control means (8) being configured to associate the variation of the flow of the fuel stream (F) with variations of the movement of the valve body (12).

12. A fuel dispensing unit according to any one of claims 5-11, wherein the fuel line (3) comprises a flow meter (7) for measuring the flew of the fuel stream (F).

13. A fuel dispensing unit according to any one of claims 5-12, wherein the fuel line (3) comprises a pressure sensor (10) for measuring a pressure exerted by the fuel stream (F), said control means (8) being configured to associate the variation of the flow of the fuel stream (F) with variations of the pressure measured by the pressure sensor (10).

14. A fuel dispensing unit according to any one of claims 5-13, wherein the value unit (11) is controlled by an electrical signal, said control means (8) being configured to associate the variation of the flow of the fuel stream (F) with variations of said electrical control signal.

15. A fuel dispensing unit according to any one of claims 5-14, wherein the fuel line (3) comprises an air separator (2) arranged upstream a fuel pump (5) and downstream the valve unit (11).

## Patentansprüche

1. Verfahren zum Überwachen eines Kraftstoffstroms (F), der aus einem Kraftstoff-Vorratstank (4), durch eine Kraftstoffleitung (3) und zu einer Kraftstoff-Abgabedüse (6) einer Kraftstoff-Abgabeanlage (1) fließt, wobei das Verfahren die folgenden Schritte umfasst:
das Erzeugen einer Veränderung der Durchflussmenge des Kraftstoffstroms (F) mit Hilfe einer Ventilanlage (11), wobei die Veränderung auf der Menge an gasförmigem Fluid in dem Kraftstoffstrom (F) beruht,
das Erfassen der Veränderung der Durchflussmenge des Kraftstoffstroms (F) und
das Feststellen, ob die erfasste Veränderung ein spezifisches Niveau überschreitet.

2. Verfahren nach Anspruch 1, wobei der Schritt des Erzeugens einer Veränderung das Anhalten des Durchflusses des Kraftstoffstroms (F), falls die Menge an gasförmigem Fluid in dem Kraftstoffstrom (F) ein spezifisches Niveau überschreitet, umfasst.

3. Verfahren nach Anspruch 1 oder 2, das ferner den Schritt des Anhaltens des Durchflusses des Kraftstoffstroms (F), falls die erfasste Veränderung der Durchflussmenge des Kraftstoffstroms (F) ein spezifisches Niveau überschreitet, umfasst.

4. Verfahren nach einem der Ansprüche 1 bis 3, wobei der Schritt des Erfassens der Veränderung der Durchflussmenge des Kraftstoffstroms (F) einen der folgenden Schritte umfasst:
das Messen der Kraftstoff-Durchflussmengenveränderungen mit Hilfe eines in der Kraftstoffleitung (3) angeordneten Kraftstoffzählers (7), das Erfassen von Druckveränderungen mit Hilfe eines in der Kraftstoffleitung (3) angeordneten Drucksensors und
das Erfassen von Bewegungsveränderungen mit Hilfe eines in der Kraftstoffleitung (3) angeordneten Bewegungssensors (9), der die Ventilanlage (11) überwacht.

5. Kraftstoff-Abgabeanlage zum Bereitstellen eines Kraftstoffstroms (F), der aus einem Kraftstoff-Vorratstank (4), durch eine Kraftstoffleitung (3) und zu einer Kraftstoff-Abgabedüse (6) der Kraftstoff-Abgabeanlage (1) fließt, die Regelungsmittel (8) umfasst, die dafür konfiguriert sind, eine Veränderung der Durchflussmenge des Kraftstoffstroms (F) zu erfassen, wobei die Regelungsmittel (8) dafür konfiguriert sind, festzustellen, ob die erfasste Veränderung ein spezifisches Niveau überschreitet, **gekennzeichnet durch**:
eine Ventilanlage (11), die dafür konfiguriert ist, die Durchflussmenge des Kraftstoffstroms (F) zu verändern, wobei die Veränderung auf der Menge an gasförmigem Fluid in dem Kraftstoffstrom (F) beruht.

6. Kraftstoff-Abgabeanlage nach Anspruch 5, wobei die Regelungsmittel (8) dafür konfiguriert sind, den Durchfluss des Kraftstoffstroms (F) anzuhalten, falls die Menge an gasförmigem Fluid in dem Kraftstoffstrom (F) ein spezifisches Niveau überschreitet.

7. Kraftstoff-Abgabeanlage nach Anspruch 5 oder 6, wobei die Regelungsmittel (8) dafür konfiguriert sind, den Durchfluss des Kraftstoffstroms (F) anzuhalten, falls die erfasste Veränderung des Kraftstoffstroms (F) ein spezifisches Niveau überschreitet.

8. Kraftstoff-Abgabeanlage nach einem der Ansprüche 5 bis 7, wobei die Ventilanlage (11) ein bewegliches Ventilgehäuse (12) zum Verändern des Kraftstoffstroms (F) umfasst.

9. Kraftstoff-Abgabeanlage nach Anspruch 8, wobei die Ventilanlage (11) dafür konfiguriert ist, zu öffnen, wenn ein durch den Kraftstoffstrom (F) auf das Ventilgehäuse (12) ausgeübter Druck ein spezifisches Niveau überschreitet.

10. Kraftstoff-Abgabeanlage nach Anspruch 8 oder 9, wobei die Ventilanlage (11) ein elastisches Element (13) umfasst, das dafür konfiguriert ist, eine Vorspannkraft auf das Ventilgehäuse (12) bereitzustellen, um die Ventilanlage (11) zu schließen.

11. Kraftstoff-Abgabeanlage nach einem der Ansprüche 8 bis 10, wobei die Regelungsmittel (8) einen Sensor (9) zum Erfassen einer Bewegung des Ventilgehäuses (12) umfassen, wobei die Regelungsmittel (8) dafür konfiguriert sind, die Veränderung der Durchflussmenge des Kraftstoffstroms (F) mit Veränderungen der Bewegung des Ventilgehäuses (12) zu verknüpfen.

12. Kraftstoff-Abgabeanlage nach einem der Ansprüche 5 bis 11, wobei die Kraftstoffleitung (3) ein Durchflussmessgerät (7) zum Messen der Durchflussmenge des Kraftstoffstroms (F) umfasst.

13. Kraftstoff-Abgabeanlage nach einem der Ansprüche 5 bis 12, wobei die Kraftstoffleitung (3) einen Drucksensor (10) zum Messen eines durch den Kraftstoffstrom (F) ausgeübten Drucks umfasst, wobei die Regelungsmittel (8) dafür konfiguriert sind, die Veränderung der Durchflussmenge des Kraftstoffstroms (F) mit Veränderungen des durch den Drucksensor (10) gemessenen Drucks zu verknüpfen.

14. Kraftstoff-Abgabeanlage nach einem der Ansprüche 5 bis 13, wobei die Ventilanlage (11) durch ein elektrisches Signal gesteuert wird, wobei die Regelungsmittel (8) dafür konfiguriert sind, die Veränderung der Durchflussmenge des Kraftstoffstroms (F) mit Veränderungen des elektrischen Signals zu verknüpfen.

15. Kraftstoff-Abgabeanlage nach einem der Ansprüche 5 bis 14, wobei die Kraftstoffleitung (3) einen Luftabscheider (2) umfasst, der stromaufwärts einer Kraftstoffpumpe (5) und stromabwärts der Ventilanlage (11) angeordnet ist.

## Revendications

1. Procédé de surveillance d'un courant de carburant (F) s'écoulant à partir d'un réservoir de stockage de carburant (4), à travers une ligne de carburant (3) et vers une buse de distribution de carburant (6) d'une unité de distribution de carburant (1), ledit procédé comprenant les étapes consistant à :
générer une variation de l'écoulement du courant de carburant (F) au moyen d'une unité de soupape (11), ladite variation étant basée sur la quantité de fluide gazeux dans le courant de carburant (F),
détecter la variation de l'écoulement du courant de carburant (F), et
déterminer si la variation détectée excède un niveau spécifique.

2. Procédé selon la revendication 1, dans laquelle l'étape de génération d'une variation comprend d'arrêter l'écoulement du courant de carburant (F), si la quantité de fluide gazeux dans le courant de carburant (F) excède un niveau spécifique.

3. Procédé selon la revendication 1 ou 2, comprenant en outre l'étape d'arrêt de l'écoulement du courant de carburant (F), si la variation détectée de l'écoulement du courant de carburant (F) excède un niveau spécifique.

4. Procédé selon une quelconque des revendications 1 à 3, dans laquelle l'étape de détection de la variation d'écoulement du courant de carburant (F) comprend une quelconque des étapes consistant à :
mesurer les variations d'écoulement de carburant au moyen d'une jauge de carburant (7) agencée dans la ligne de carburant (3), détecter des variations de pression au moyen d'un capteur de pression agencé dans la ligne de carburant (3), et
détecter des variations de mouvement au moyen d'un capteur de mouvement (9) surveillant l'unité de soupape (11) agencée dans la ligne de carburant (3).

5. Unité de distribution de carburant pour fournir un courant de carburant (F) s'écoulant à partir d'un réservoir de stockage de carburant (4), à travers une ligne de carburant (3) et vers une buse de distribution de carburant (6) de l'unité de distribution de carburant (1), comprenant un moyen de commande (8) configuré afin de détecter une variation de l'écoulement du courant de carburant (F), le moyen de commande (8) étant configuré afin de déterminer si la variation détectée excède un niveau spécifique, **caractérisée par** :
une unité de soupape (11) configurée afin de varier l'écoulement du courant de carburant (F), ladite variation étant basée sur la quantité de fluide gazeux dans le courant de carburant (F).

6. Unité de distribution de carburant selon la revendication 5, dans laquelle le moyen de commande (8) est configuré afin d'arrêter l'écoulement du courant de carburant (F), si la quantité de fluide gazeux dans le courant de carburant (F) excède un niveau spécifique.

7. Unité de distribution de carburant selon la revendication 5 ou 6, dans laquelle le moyen de commande (8) est configuré afin d'arrêter l'écoulement du courant de carburant (F), si une variation détectée de l'écoulement du courant de carburant (F) excède un niveau spécifique.

8. Unité de distribution de carburant selon une quelconque des revendications 5 à 7, dans laquelle l'unité de soupape (11) comprend un corps de soupape déplaçable (12) pour varier l'écoulement du courant de carburant (F).

9. Unité de distribution de carburant selon la revendication 8, dans laquelle l'unité de soupape (11) est configurée afin de s'ouvrir quand une pression exercée sur le corps de soupape (12) par le courant de carburant (F) excède un niveau spécifique.

10. Unité de distribution de carburant selon la revendication 8 ou 9, dans laquelle l'unité de soupape (11) comprend un élément résilient (13) configuré afin de fournir une force de précontrainte sur le corps de soupape (12) pour fermer l'unité de soupape (11).

11. Unité de distribution de carburant selon une quelconque des revendications 8 à 10, dans laquelle le moyen de commande (8) comprend un capteur (9) pour détecter le mouvement du corps de soupape (12), ledit moyen de commande (8) étant configuré afin d'associer la variation de l'écoulement du courant de carburant (F) à des variations du mouvement du corps de soupape (12).

12. Unité de distribution de carburant selon une quelconque des revendications 5 à 11, dans laquelle la ligne de carburant (3) comprend un débitmètre (7) pour mesurer l'écoulement du courant de carburant (F).

13. Unité de distribution de carburant selon une quelconque des revendications 5 à 12, dans laquelle la ligne de carburant (3) comprend un capteur de pression (10) pour mesurer une pression exercée par le courant de carburant (F), ledit moyen de commande (8) étant configuré afin d'associer la variation de l'écoulement du courant de carburant (F) aux variations de la pression mesurée par le capteur de pression (10).

14. Unité de distribution de pression selon une quelconque des revendications 5 à 13, dans laquelle l'unité de soupape (11) est commandée par un signal électrique, ledit moyen de commande (8) étant configuré afin d'associer la variation de l'écoulement du courant de carburant (F) aux variations dudit signal de commande électrique.

15. Unité de distribution de carburant selon une quelconque des revendications 5 à 14, dans laquelle la ligne de carburant (3) comprend un séparateur d'air (2) agencé en amont d'une pompe de carburant (5) et en aval de l'unité de soupape (11).
